# EUROPEAN PATENT SPECIFICATION

(11) **EP 3 759 343 B1**
(45) Date of publication and mention of the grant of the patent: **03.11.2021**
(21) Application number: 19779359.9
(22) Date of filing: 23.09.2019
(51) Int. Cl.: F03D 17/00

(54) **A METHOD FOR ASSESSING THE RELIABILITY OF DATA RELATING TO THE OPERATION OF A WIND TURBINE**
VERFAHREN ZUR BESTIMMUNG DER ZUVERLÄSSIGKEIT VON DATEN BEZÜGLICH DES BETRIEBS EINER WINDTURBINE
PROCÉDÉ D'ÉVALUATION DE LA FIABILITÉ DE DONNÉES RELATIVES AU FONCTIONNEMENT D'UNE ÉOLIENNE

(30) Priority: 25.09.2018 DK PA201800633
(43) Date of publication of application: 06.01.2021
(73) Proprietor: Scada International A/S, 8600 Silkeborg (DK)
(72) Inventor: LOVMAND, Bo, 8370 Hadsten (DK)
(74) Representative: Rasmussen, Martin Hoffgaard
(86) International application number: PCT/DK2019/050279
(87) International publication number: WO 2020/064070

(56) References cited:
- WO-A1-03/029648
- WO-A2-2012/025121
- US-A1- 2004 230 377
- US-A1- 2005 090 937
- US-A1- 2017 350 370

## Description

### Field of the invention

The present invention relates in general to the field of wind turbines. More specifically the present invention relates in a first aspect to a method for assessing the reliability of data originating from monitoring a wind turbine during operation thereof.

In a second aspect the present invention relates to a computer program product, which when loaded and/or operating on a computer, being configured for performing a method according to the first aspect of the present invention

In a third aspect the present invention relates to a SCADA system (Supervisory Control And Data Acquisition System) comprising a computer program product as defined in respect of the second aspect of the present invention.

In a fourth aspect the present invention relates to the use of a correlation of information for assessing the reliability of data originating from monitoring said wind turbine during operation thereof.

In a fifth aspect the present invention relates to use of a correlation of information for correcting erroneous time stamps of alarm values.

In a sixth aspect the present invention relates to use of corrected data as obtained according to the method of the first aspect of the present invention for calculating the amount of time in respect of which said wind turbine, or parts thereof, has been operating properly and/or improperly, regarding a specific type of condition triggering an alarm having a specific alarm ID.

### Background of the invention

Within the field of wind turbines and the operation thereof it is customary that the manufacturer which has manufactured the wind turbine or pats thereof is/are different from the company responsible for operating the wind turbine or wind farm.

In order to secure or guarantee the operator's viable economy in respect of operating a wind turbine or a wind farm it is customary that a contract is agreed between the manufacturer of the wind turbine or parts thereof one the one hand and the operator of the wind turbine or wind farm, on the other hand.

In such a contract it is stipulated which types of faults, errors and special conditions leading to missing or reduced power production is the responsibility of the producer and which types of faults, errors and special conditions leading to missing or reduced power production is the responsibility of the operator.

Typically, such a contract will also contain detailed calculation schedule dividing the value represented by the power produced by a wind turbine between the manufacturer and the operator according to predetermined schedule of allocations. Hereby the manufacturer will have an incentive to continuously improve the quality of the components making up the wind turbine in order to reduce the downtime of the wind turbine. This will eventually secure an optimum energy production.

However, even in a situation in which no such contract exists or in a situation in which the term of such a contract has expired, it is of high interest for the operator of the wind turbine to continuously gain information relating to the operational state of the wind turbine, including information relating the duration of and in which specific periods of time the wind turbine has been operating properly or not properly.

A wind turbine is operated by the use of a control system which monitors a vast number of parameters associated with the operation of the wind turbine.

The monitoring of the parameters is performed by using a number of sensors arranged in and on the wind turbine. Each sensor is responsible for sensing a specific parameter or group of parameters.

The control system is configured to use the parameters sensed by the sensors as inputs in the calculation of a feedback procedure. In this way a wind turbine can be operated automatically according to a predetermined algorithm using monitored parameters, sensed by sensors, to create a feedback response which in turn is used for controlling the wind turbine.

In addition to using the parameters sensed by the sensors as inputs in the calculation of a feedback procedure for controlling the wind turbine, the control system is also configured, from the sensed parameters, to determine whether or not a critical event has happened.

A critical event will make the control system instruct the wind turbine to shut down, i.e. to bring the wind turbine into a state in which the rotor stops rotating so that no power is being produced.

Many different parameter values sensed by the sensors, or combination thereof, may lead to a situation in which the control system has been predetermined to identify a critical event and subsequently shut down the wind turbine. Each such critical event situation is associated with an associated alarm ID, identifying which type of critical event is the cause for shutting down the wind turbine.

Typically, a control system of a wind turbine is coupled to a monitoring system which receives and stores on a data storage, data relating to the operation of the wind turbine.

The operational data may specifically comprise information relating to the setting and resetting of various alarms being sent to the control system and also the time stamps indicating the point in time of such settings and resettings of alarms.

Accordingly, the operational data may represent valuable information in the process of determining the amount of time in which the wind turbine, or specific parts thereof, have been operating properly or improperly.

As already indicated such information is used when dividing the value represented by the power produced by a wind turbine between the operator, operating the wind turbine on the one hand, and the manufacturer(s) of the wind turbine or parts thereof, on the other hand; or simply is used for gaining detailed insight into the operational state of the wind turbine.

Now, it may happen that the data received by the monitoring system from the control system and relating to the setting and resetting of various alarms and their associated time stamps, indicating the point in time of such settings and resettings of alarms, are not being properly transmitted from the control system of the wind turbine to the monitoring system.

If this happens the data registered by the monitoring system does not represent an accurate picture of the operational state of the wind turbine during operation thereof.

It is clear that an incorrect picture of an operational state of a wind turbine will lead to an allocation of the value represented by the power produced by a wind turbine between the manufacturer and the operator in a way which deviates from the true situation and thereby the actual allocation of value being calculated does not comply with the original intention as stipulated by the contract agreed between the operator and the manufacturer of the wind turbine.

Accordingly, a need persists to secure a more accurate monitoring and storing of data relating to the timewise operational state and alarm situation of a wind turbine or a wind farm during operation thereof.

The present invention in its various aspect seeks to meet this need.

Accordingly, it is an objective of the present invention to provide methods, uses and devices which solves the problems relating to monitoring and logging data associated with the timewise operational state and alarm situation of a wind turbine during operation thereof. Some examples of prior art solutions are available in documents US 2004/230377 A1, US 2005/090937 A1 and KR 101 789 923 B1.

### Brief description of the invention

These objectives are fulfilled according to the first, the second, the third, the fourth, the fifth and the sixth aspect of the present invention.

Accordingly, the first aspect of the present invention relates to a method for assessing the reliability of data originating from monitoring a wind turbine during operation thereof; said method comprising the steps of:
allowing an array of sensors to sense one or more specific parameter values of said wind turbine;
in respect of one or more sensors, transmitting said parameter value being sensed to a control system;
allowing said control system to register an alarm condition in case a sensed parameter value, or a combination of two or more sensed parameter values, represents a situation in which it is desired to shut down the wind turbine according to one or more predetermined criteria;
allowing said control system to provide an alarm value; wherein said alarm value being selected from the group comprising: setting of said alarm and resetting of said alarm; wherein such alarm condition is associated with a specific alarm ID;
wherein said method in respect of one or more alarm IDs furthermore comprising the steps of:
   i) in respect of a specific time span, detecting one or more alarm values representing one or more settings and/or one or more resettings of said having said alarm ID; and at the same time registering an associated time stamp relating to the point in time corresponding to the appearance of said one or more settings and/or one or more resettings of said alarm IDs;
   ii) in respect of said time span, detecting information representing a power production value of said wind turbine as a function of time, said power production value being selected from the group comprising; information indicating that power is being produced by said wind turbine, and information indicating that no power is being produced by said wind turbine;
   iii) in respect of said time span, or a portion thereof, correlating the information representing said power production value as a function of time on the one hand; with the time stamps of the one or more settings and/or resettings in respect of said alarm ID, on the other hand;
   iv) determining whether or not a discrepancy exists between said information representing a power production value as a function of time on the one hand; and said time stamps detected in respect of said one or more settings and/or resettings in respect of said alarm ID, on the other hand;
   v) in case a discrepancy is determined in step iv); annotating said specific alarm value in respect of said alarm ID as being unreliable in said time span or in said portion thereof.

In a second aspect the present invention relates to a computer program product, which when loaded and/or operating on a computer, being configured for performing a method according to the first aspect of the present invention.

In a third aspect the present invention relates to a SCADA system (Supervisory Control And Data Acquisition System) comprising a computer program product as defined in respect of the second aspect of the present invention.

In a fourth aspect the present invention relates to the use of a correlation between information representing a power production value as a function of time of a wind turbine on the one hand; and the time stamps of one or more settings and/or one or more resettings in respect of an alarm ID being detected in the operation of said wind turbine, on the other hand, for assessing the reliability of data originating from monitoring said wind turbine during operation thereof.

In a fifth aspect the present invention relates to the use of a correlation between information representing a power production value as a function of time of a wind turbine on the one hand; and the time stamps of one or more settings and/or one or more resettings in respect of an alarm ID being detected in the operation of said wind turbine, on the other hand, for correcting erroneous time stamps of alarm values.

In a sixth aspect the present invention relates to use of corrected data as obtained according to the method of the first aspect of the present invention for calculating the amount of time in respect of which said wind turbine, or parts thereof, has been operating properly and/or improperly, regarding a specific type of condition triggering an alarm having a specific alarm ID.

The present invention in its various aspects provides for assessing the reliability of operational data being supplied from a control system of a wind turbine to a corresponding monitoring system. In special embodiments the present invention furthermore provides for correcting such unreliable data being supplied from a control system of a wind turbine to a corresponding monitoring system.

Thereby the operational quality of the wind turbine can be assessed subsequent to the operation of the wind turbine.

### Brief description of the figures

Fig. 1 schematically illustrates some of the components of a wind turbine employed in the present invention.
Fig. 2 illustrates one example of the correlation of various information in the method according to the method of first aspect of the present invention.
Fig. 3 illustrates another example of the correlation of various information in the method according to the method of first aspect of the present invention.

### Detailed description of the invention

### The first aspect of the present invention

The first aspect of the present invention relates to a method for assessing the reliability of data originating from monitoring a wind turbine during operation thereof; said method comprising the steps of:
allowing an array of sensors to sense one or more specific parameter values of said wind turbine;
in respect of one or more sensors, transmitting said parameter value being sensed to a control system;
allowing said control system to register an alarm condition in case a sensed parameter value, or a combination of two or more sensed parameter values, represents a situation in which it is desired to shut down the wind turbine according to one or more predetermined criteria;
allowing said control system to provide an alarm value in case an alarm condition is registered; wherein said alarm value being selected from the group comprising: setting of said alarm and resetting of said alarm; wherein such alarm condition is associated with a specific alarm ID;
wherein said method in respect of one or more alarm IDs furthermore comprising the steps of:
   i) in respect of a specific time span, detecting one or more alarm values representing one or more settings and/or one or more resettings of said type of alarm; and at the same time registering an associated time stamp relating to the point in time corresponding to the appearance of said one or more settings and/or one or more resettings of said alarm IDs;
   ii) in respect of said time span, detecting information representing a power production value of said wind turbine as a function of time, said power production value being selected from the group comprising; information indicating that power is being produced by said wind turbine, and information indicating that no power is being produced by said wind turbine;
   iii) in respect of said time span, or a portion thereof, correlating the information representing said power production value as a function of time on the one hand; with the time stamps of the one or more settings and/or resettings in respect of said alarm ID, on the other hand;
   iv) determining whether or not a discrepancy exists between said information representing a power production value as a function of time on the one hand; and said time stamps detected in respect of said one or more settings and/or resettings in respect of said alarm ID, on the other hand;
   v) in case a discrepancy is determined in step iv); annotating said specific alarm value in respect of said alarm ID as being unreliable in said time span or in said portion thereof.

Accordingly, the present invention in a first aspect provides for utilizing available information for assessing the reliability of the data received by a monitoring system from the control system of the wind turbine in relation to the timewise operational state and alarm situation of the wind turbine during operation thereof.

In the following description and in the appended claims the following definitions may be adhered to:
Alarm value: An alarm value is a value being provided by the control system of the wind turbine. An alarm value can have one of two values; either the alarm value is "set" or "reset". A "set" value indicates that a critical event has been detected, which results in the wind turbine is being shut down by the control system. A "reset" value in respect of a specific alarm indicates a situation in which the critical value, setting the alarm in the first place, is no longer present.
Time stamp: A time stamp in respect of the setting or resetting of an alarm shall be construed to mean the point in time at which the alarm is being set or reset, as the case may be.
Discrepancy: A discrepancy shall be construed to mean that an inconsistency exists between information indicating that in respect of a given period of time, power is being produced by the wind turbine on the one hand; and information indicating that an alarm is set in that same period of time, on the other hand.

In the description and in the appended claims the definition of the invention of the first aspect includes the term "allowing" followed by an action which is allowed to be performed. In this respect it should be noted that the action following the term "allowing" is not to be construed as an optional feature which may or may not be included. Rather, the term "allowing" as used in the definitions of the present invention should be construed in such a way that, in the invention, the action following the term "allowing" indeed is carried out (obviously taking into account any stated or implied conditional prerequisite).

In one embodiment of the method according to the first aspect of the present invention the system is connected to a monitoring system, wherein said monitoring system is configured, in respect of one or more alarm IDs, for receiving and storing data relating to said alarm values and associated time stamps, as detected in step i) and data relating to said information representing a power production value as a function of time, as detected in step ii).

Hereby a record of monitored data can be kept which allows subsequent, i.e. non-real time assessment of the reliability of the data being monitored.

In one embodiment of the method according to the first aspect of the present invention step iii), iv) and v), and optionally also step i) and ii) are being performed by said monitoring system.

In one embodiment of the method according to the first aspect of the present invention the number of sensors in said array of sensors and/or the number of alarm IDs of said wind turbine independently is selected from the ranges of 5 - 2000 or more, such as 10 - 1000, for example, 25 - 900, such as 50 - 800, for example 100 - 800, e.g. 200 - 700, such as 300 - 600 or 400 - 500.

Such numbers of sensors are common in modern wind turbines.

In one embodiment of the method according to the first aspect of the present invention the one or more of said one or more sensors relate to sensors for sensing:
problems with the mechanics; such as undesirably low level of gear oil, undesirably high bearing temperature, stuck pitch actuator, undesirably high yaw misalignment; and/or
problems with the grid, such as undesirably low grid frequency, undesirably high grid voltage, phase asymmetry; and/or
problems with the environment, such as undesirably high wind speed, undesirably low ambient temperature, undesirably low wind speed; and/or
external commands, such as remote stop instructions; and/or
normal operation, such as untwisting cables, performance of self-test, state of heating component;
presence of condensate in the electrical system, such as in the converter.

These types of problems typically could trigger one or more alarm IDs.

In one embodiment of the method according to the first aspect of the present invention the representation of the power production as a function of time, which is being detected in step ii) relates to one of the following: power produced, such as average power produced in a time segment of a predetermined duration; torque exhibited by the rotor axle of the wind turbine, such as average torque exhibited by the rotor axle of the wind turbine in a time segment of a predetermined duration; angular velocity measured in respect of the rotor axle of the wind turbine, such as average angular velocity measured in respect of rotor axle of the wind turbine in a time segment of a predetermined duration; current induced in the generator of the wind turbine, such as average current induced in the generator of the wind turbine in a time segment of a predetermined duration; voltage induced in the generator of the wind turbine, such as average voltage induced in the generator of the wind turbine in a time segment of a predetermined duration; general information that the operational state of the wind turbine is being OK or not OK.

These types of representations of the power production as a function of time are suitable for being employed in the method according to the first aspect of the present invention.

In one embodiment of the method according to the first aspect of the present invention the time span is having a duration of 1 - 600 min, such as 2 - 550 min, for example 3 - 500 min, such as 4 - 450 min, such as 5 - 400 min, e.g. 6 - 350 min, such as 7 - 300 min, for example 8 - 250 min, e.g. 9 -200 min, such as 10 - 150 min, for example 15 - 120 min, such as 30 - 90 min or 45 - 60 min.

These durations of time spans are suitable for being employed in the method according to the first aspect of the present invention.

In one embodiment of the method according to the first aspect of the present invention the discrepancy as determined in step iv) is caused by lack of detection of a resetting of said alarm ID, or is caused by lack of detection of a setting of said alarm ID.

These two causes are causes which can be detected according to the method according to the first aspect of the present invention.

In one embodiment of the method according to the first aspect of the present invention the method further comprises the following step:
vi) in case no discrepancy is determined in step iv); annotating said specific alarm value of said alarm ID as being reliable in said time span or in said portion thereof.

Hereby, the method can be used to acknowledge reliability of data transmitted from the control system to the monitoring system.

In one embodiment of the method according to the first aspect of the present invention the method is being performed automatically.

In one embodiment of the method according to the first aspect of the present invention the method is being performed continuously or regularly in respect of successive time spans.

These two embodiments in a conveniently way ensures continuous assessment of the reliability of the data in question.

In one embodiment of the method according to the first aspect of the present invention the method furthermore comprising correcting an alarm value, which in step v) has been annotated as being unreliable.

Whereas the method of the first aspect of the present invention, as described in the above embodiments, merely related to assessment of the reliability of data, this latter embodiment furthermore enables correction of data which has been found to be unreliable.

In one embodiment of the method according to the first aspect of the present invention the discrepancy as determined in step iv) is caused by lack of detection of a resetting of said alarm ID; wherein said correction of said alarm value comprises the following steps:
a) from the detection of the information representing a power production value as detected in step ii), determine the first point in time, subsequent to the time stamp representing the setting of the alarm ID, at which the power production value shifts from indicating that no power is being produced to indicating that power is being produced;
b) define as the corrected reset time of the alarm ID, a moment in time following said first point in time, as determined in step a).

Hereby data relating to missing the resetting of an alarm can be corrected.

In one embodiment of the method according to the first aspect of the present invention the the information representing a power production value is being provided as averaged values being averaged over a segment of time; and wherein step b) comprises:
define as the corrected reset time of the alarm ID, a moment in time falling in a time range having a starting point and an end point;
wherein said starting point of said time range being the first time, at which the power production value shifts from indicating that no power is being produced to indicating that power is being produced, as determined in step a); and
wherein said end point of said time range being a point in time falling subsequent to said starting point by a duration corresponding to duration of said time segment.

This embodiment sets out a simple way to correct data relating to the missing of the resetting of an alarm.

In one embodiment of the method according to the first aspect of the present invention the discrepancy as determined in step iv) is caused by lack of detection of a setting of said alarm ID; wherein said correction of said alarm value comprises the following steps:
a) from the detection of the information representing a power production value as detected in step ii), determine the first point in time, preceding the time stamp representing the resetting of the alarm ID, at which the power production value shifts from indicating that power is being produced to indicating that no power is being produced;
b) define as a corrected set time of the alarm ID, a moment in time preceding said first point in time, as determined in step a).

Hereby data relating to missing the setting of an alarm can be corrected.

In one embodiment of the method according to the first aspect of the present invention the information representing a power production value is being provided as averaged values being averaged over a segment of time; wherein step b) comprises:
define as a corrected set time of the alarm ID, a moment in time falling in a time range having a starting point and an end point;
wherein said end point of said time range being the first point in time, at which the power production value shifts from indicating that power is being produced to indicating that no power is being produced, as determined in step a);
wherein said starting point of said time range being a point in time falling prior to said end point by a duration corresponding to the duration of said time segment.

This embodiment sets out a simple way to correct data relating to the missing of the setting of an alarm.

In one embodiment of the method according to the first aspect of the present invention the time segment is having a duration of 0.1s - 600 min, such as 0.5 s - 550 min., e.g. 1 s - 500 min., such as 5 s - 450 min., e.g. 10 s - 400 min., such as 15 s - 350 min., such as 30 s - 300 min., for example 45 s - 250 min., e.g. 1 min - 200 min, such as 5 min. - 150 min., for example 10 min. - 100 min., such as 15 min. - 45 min.

These durations of time segments are suitable for being employed in the method according to the first aspect of the present invention.

In one embodiment of the method according to the first aspect of the present invention the method involves keeping a data log, logging a data set relating to one or more of the following entries: alarm values being detected, including the corresponding time stamp; information identifying the alarm ID in respect of which alarm values are being detected; the time span in respect of which a specific alarm value is being annotated as being unreliable, any corrected alarm values as determined by said method, and optionally also the corresponding corrected time stamps relating to settings and/or resettings of an alarm ID.

Keeping a data log ensures the ability to inspect data which has been logged at a point in time subsequent to the time of logging.

In one embodiment of the method according to the first aspect of the present invention and in respect of one or more of said alarm IDs, a first original data log is being kept which logs and stores original data being supplied from the control system; and wherein a second data log is being kept, which logs and stores corrected data which represents original data which has been corrected by the method according to any of the preceding claims.

Hereby the original data is easily distinguishable from the corrected data.

In one embodiment of this embodiment of the first aspect of the present invention the original data and said corrected data independently is selected from the group comprising: alarm ID, original time stamps relating to setting times and/or resetting times of a specific alarm ID, corrected time stamps relating to setting times and/or resetting times of a specific alarm ID; information relating to the power production value as a function of time.

These data are relevant in the assessment of the time spans in respect of which the wind turbine is operating properly or not properly.

In one embodiment of this embodiment of the first aspect of the present invention the power production value of said wind turbine as a function of time, as determined in step ii) further and/or alternatively comprises: information indicating that power potentially could be produced by said wind turbine in its current state, and information indicating that no power potentially could be produced by said wind turbine in its current state.

This embodiment ensures that in a case where the wind turbine is capable of producing power or not capable of producing power, but currently does not do so, e.g. because the wind is too weak, information could be provided by the control system that the wind turbine either is capable of producing power or not capable of producing power, as the case may be. Hereby it is ensured that the correlation performed in step iii) makes sense even though the wind turbine currently does not produce any power.

### The second aspect of the present invention

The second aspect of the present invention relates to a computer program product, which when loaded and/or operating on a computer, being configured for performing a method according to the first aspect of the present invention.

### The third aspect of the present invention

The third aspect of the present invention relates to a SCADA system (Supervisory Control And Data Acquisition System) comprising a computer program product as defined in respect of the second aspect.

### The fourth aspect of the present invention

The fourth aspect of the present invention relates to a use of a correlation between information representing a power production value as a function of time of a wind turbine on the one hand; and the time stamps of one or more settings and/or one or more resettings in respect of an alarm ID being detected in the operation of said wind turbine, on the other hand, for assessing the reliability of data originating from monitoring said wind turbine during operation thereof.

### The fifth aspect of the present invention

The fifth aspect of the present invention relates to a use of a correlation between information representing a power production value as a function of time of a wind turbine on the one hand; and the time stamps of one or more settings and/or one or more resettings in respect of an alarm ID being detected in the operation of said wind turbine, on the other hand, for correcting erroneous time stamps of alarm values.

### The sixth aspect of the present invention

The sixth aspect of the present invention relates to a use of corrected data as obtained according to the method of the first aspect of the present invention for calculating the amount of time in respect of which said wind turbine, or parts thereof, has been operating properly and/or improperly, regarding a specific type of condition triggering an alarm having a specific alarm ID.

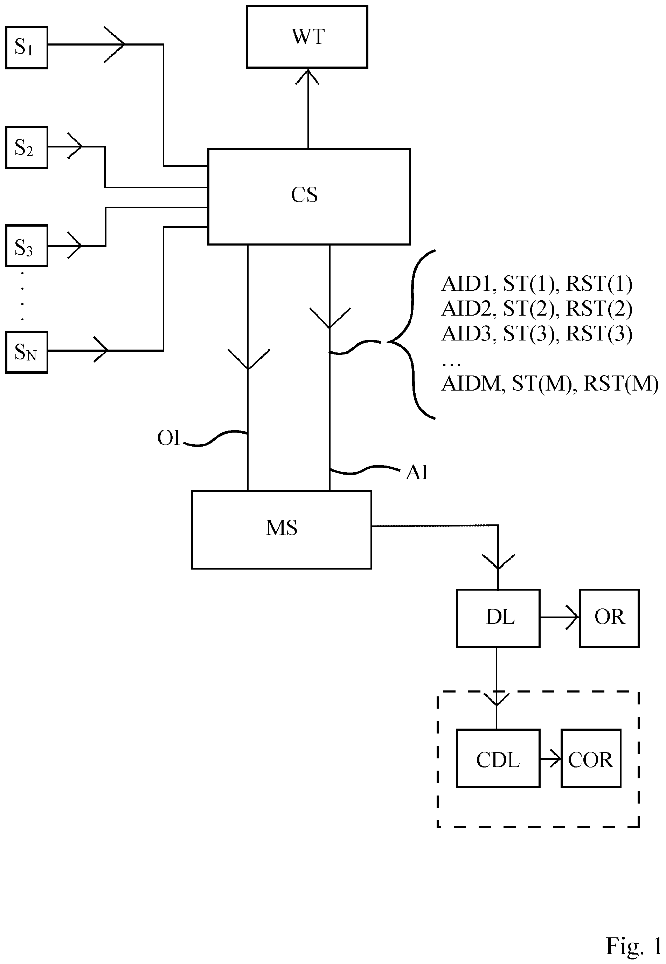

Referring to the figures in order to better illustrating the present invention, Fig. 1 is a schematic diagram which in a very simplified manner illustrates the operation of a wind turbine

Fig. 1 shows the wind turbine WT which is being controlled by a control system CS according to a predetermined control algorithm. A number of sensors S₁, S₂, S₃... S_{N} sense various parameter values during the operation of the wind turbine. These parameter values are being transmitted to the control system CS.

Accordingly, the parameter values being transmitted to the control system is used as input in the algorithm determining a proper feedback reaction in respect of operating the wind turbine.

Various operation information OI is being sent to a monitoring system MS during operation of the wind turbine.

In addition to merely receiving parameter values from the sensors S₁, S₂, S₃... S_{N} and providing feedback in the operation of the wind turbine, the control system CS is also configured, from the parameter values received from the sensors S₁, S₂, S₃... S_{N}, to determine whether or not a critical event has been encountered which could jeopardize the short time and/or long time integrity of the wind turbine or components thereof. The determination of whether or not a critical event has occurred is being provided according to a predetermined algorithm.

In case the control system detects that a critical event is present, the control system instruct the wind turbine WT to shut down.

Various values of the parameters transmitted from the sensors S₁, S₂, S₃... S_{N}, or combination of such values may represent a critical event which result in the wind turbine being shut down. A critical event triggers the provision of an alarm value with an associated alarm ID, where the alarm ID identifies which reason is responsible for the setting of an alarm. The alarm value in respect of a given alarm ID X may be either setting of alarm ID X or resetting of alarm ID X.

Accordingly, besides of providing the monitoring system MS with operational information OI, also alarm information AI is provided to the monitoring system MS. Such alarm information may in respect of a given alarm ID X relate to the identity of alarm ID X in question, i.e. A ID X, and the time stamp associated with the setting time of alarm ID X, i.e. ST(X), and the time stamp associated with the resetting time of alarm ID X, i.e. RST(X).

The operational information OI and the alarm information AI received by the monitoring system MS may be logged in a data log DL. From the data log DL may be retrieved an operational report OR, setting out details relating to the operation of the wind turbine, especially the duration of time periods at which the wind turbine WT or specific components thereof are operating properly or not properly.

The operational report OR is used in the calculation of the sharing of the value represented by the power produced by the wind turbine between the operator of the wind turbine on the one hand and the manufacturer of the wind turbine, or parts thereof on the other hand.

In a situation in which, for whatever reason, the monitoring system MS does not receive correct information relating to a critical event from the control system CS, it is clear that the data log DL, from which the operational report OR is retrieved, will not reflect the true operational conditions of the wind turbine WT.

Thereby, also the calculation of the value represented by the power produced by the wind turbine, and the allocation thereof, between the operator of the wind turbine on the one hand manufacturer of the wind turbine, or parts thereof on the other hand, will not be performed in accordance with the original intentions agreed upon.

Typical reasons that the monitoring system MS does not receive correct information from the control system CS may relate to missing information relating to settings and resettings of a specific alarm ID representing a critical event being detected by the control system CS.

The present invention seeks to solve the problems of the above working mode of the wind turbine WT.

This solution is brought about in that unreliable information received by the monitoring system MS from the control system CS and represented in the operational report is identified and corrected. Thereby a corrected operational report COR may be obtained as indicated in fig. 1 by the dashed rectangle.

It should be noted that the sensors S₁, S₂, S₃... S_{N} in Fig. 1 are shown separate from the wind turbine WT. This is only for the sake of simplicity. In a real life situation many of the sensors S₁, S₂, S₃... S_{N} will be located in or on the wind turbine WT itself.

### Example 1

This example illustrates one embodiment of the present invention, where a wind turbine is monitored during its operation and where data origination from such monitoring of the wind turbine is found unreliable and subsequently corrected.

The wind turbine in this example comprises an array of sensors arranged at various parts and components of the wind turbine and each of these sensors are configured to provide to a control system, parameter data relating to the parameter sensed by the individual sensor.

The wind turbine is in turn configured to register that a critical event is present in case a sensed parameter value, or a combination of two or more sensed parameter values, represents a situation in which it is desired to shut down the wind turbine. Accordingly, a critical event will always make the control system shut down the wind turbine.

When and when not to shut down the wind turbine is embedded in the control system according to one or more predetermined criteria.

The reason for desiring to shut down the wind turbine is that the critical event being sensed, either in the short term or in the long term represents an unhealthy condition for the wind turbine or the integrity thereof, or even worse, that the critical event may pose hazards to personnel being located in the vicinity of the wind turbine.

When an operational condition is being encountered which corresponds to a critical event which is being registered by that control system, and also when such a critical condition ceases to be present, the control system provides an alarm value. The alarm value being selected from the group comprising: setting of the alarm and resetting of the alarm.

Besides of comprising a control system for controlling the wind turbine, the wind turbine is also coupled to a monitoring system which is configured for logging and storing various data.

In this simplified example the data which is being logged and stored by the monitoring system is the alarm value of a specific alarm (i.e. setting of a specific alarm ID and resetting of a specific alarm type ID and the associated time stamps associated with the setting and the resetting of that alarm ID).

Furthermore, the monitoring system also logs and stores information representing a power production value of said wind turbine as a function of time; that is information indicating whether power is being produced by said wind turbine, or whether no power is being produced by said wind turbine.

As we will see below, correlating time stamps of the setting and resetting of an alarm ID with information relating to a power production value allows for assessing the reliability of the time stamps of such settings and resettings of an alarm ID, and in case such time stamps are being annotated as unreliable, furthermore provides for correcting such time stamps.

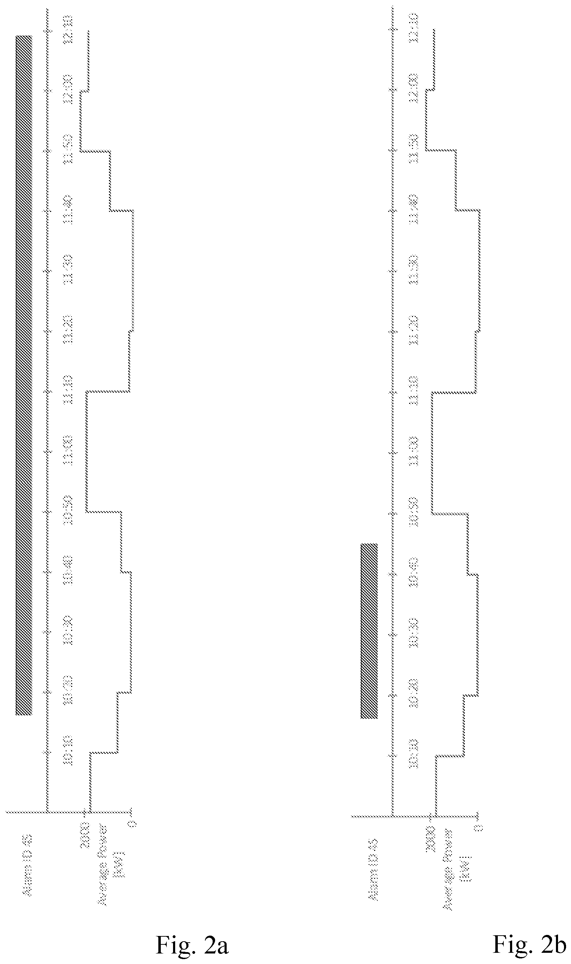

The invention is further illustrated with reference to Fig. 2a and 2b.

Fig. 2a is a graphical illustration representing data which have been logged and stored by a monitoring system. The data received by the monitoring system is received from the control system controlling the wind turbine.

Fig. 2a illustrates that a wind turbine has been monitored during a time span ranging from approximately 10:00 to approximately 12:10.

Alarm values have been monitored and it appears that at approximately 10:17 the setting of Alarm ID 45 is detected. The setting of Alarm ID 45 lasts until approximately 12:09. This setting of the Alarm ID 45 is represented by the solid bar in Fig. 1a.

The monitoring system of this example also logs and stores information representing a power production value as a function of time which indicates whether or not power is being produced. In the present example the information representing a power production value is in the form of an average power production, averaged over successive segments of time, each of a duration of 10 min. The information representing a power production value is seen as the lower curve in Fig. 1a.

Now, it is seen that at approximately 10:20 to 10:40 the average power production is zero, correctly corresponding to the registration of the Alarm ID 45 at approximately 10:17, the event of which will cause the control system of the wind turbine to shut down the wind turbine.

However, it is also seen from the average power curve in Fig. 1a that between 10:40 and 10:50 the wind turbine starts producing power again. This resuming of power production is inconsistent with the Alarm ID 45 having a set-value in the time period between 10:40 and all the way through approximately 12:09.

Therefore, as the wind turbine between 10:40 and 10:50 has resuming producing power, it can be concluded that the Alarm ID 45 cannot have a set-value (because every set-value registered originates from a critical event which will cause the control system of the wind turbine to shut down).

Accordingly, from the data corresponding to Fig. 1a it can be deduced that the value of the Alarm ID 45 cannot be correct in the full time range of approximately 10:17 through 12:09.

Hence, according to the method of the of the present invention the value of the Alarm ID 45 is annotated as unreliable.

In fact, it can furthermore be deduced from Fig. 1a that as power production is being resumed at a point in time between 10:40 and 10:50, a reset value in respect of the Alarm ID 45 has not been received in this time period from 10:40 to 10:50.

Accordingly, in the data set received from the control system, controlling the wind turbine, by the monitoring system a reset value associated with Alarm ID 45 is missing somewhere between 10:40 and 10:50.

The method according to the present invention in a further embodiment provides for correcting the unreliable alarm value in respect of Alarm ID 45.

This is illustrated with reference to Fig. 2b.

Fig. 2b illustrates the same time span ranging from approximately 10:00 to approximately 12:10 as for the time range of Fig. 1a.

As we have learned above, a missing reset value is missing in respect of Alarm ID 45 at a point in time between 10:40 and 10:50, the next step will be to provide a corrected time stamp relating to the resetting of the Alarm ID 45.

This corrected time stamp is arrived at by determining the first point in time, subsequent to the time stamp representing the setting of the alarm ID 45 (approximately 10:17), at which the power production value (average power) shifts from indicating that no power is being produced to indicating that power is being produced (at 10:40), and then defining as the corrected reset time of the alarm, a moment in time following that first point in time.

In the present example the power production value is power production averaged over time segments of a duration of 10 min. Therefore, in the present example, the corrected time stamp relating to the resetting of the Alarm ID 45 is selected as 10:40 plus haft the time segment over which the power produced is being averaged (10 min/2). Thereby we arrive at a corrected time stamp relating to the resetting of the Alarm ID 45 of 10:45.

This is entered in the corrected data log in the operative monitoring system as being a corrected time stamp of the resetting of the Alarm ID 45.

Thereby the corrected duration of the Alarm ID 45 will be approximately 10:17 to 10:45 as indicated by the solid bar in Fig. 2b.

It should be noted that in Fig. 2a and 2b it is seen that the average power production reduces to zero in the period of time from 11:20 to 11:40. However, this may be due to the setting of another Alarm ID not being under consideration in this example.

### Example 2

This example illustrates another embodiment of the method of the present invention using the same wind turbine having the same components and set-up as the wind turbine of Example 1.

Whereas Example 1 illustrated a situation in which a reset time stamp was missing, Example 2 illustrates a situation in which more set time stamps are missing.

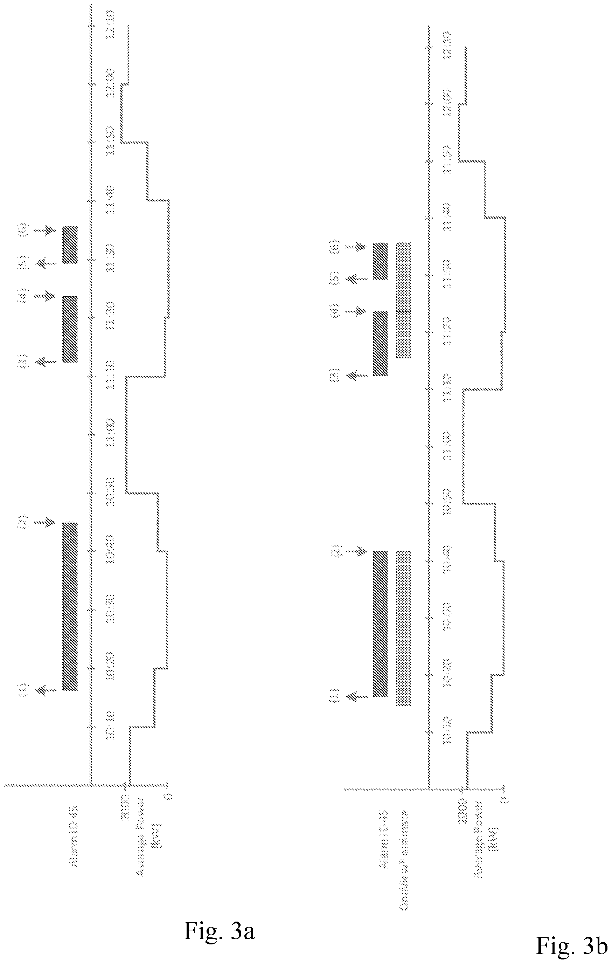

Referring to Fig. 3a, this figure illustrates a situation in which the Alarm ID 45 has been set and reset three times in the time span of approximately from 10:00 through 12:10.

The Alarm ID is set first time at approximately 10:17 and then reset again at 10:45. These events are indicated by numerals (1) and (2), respectively. Subsequently, the Alarm ID 45 is set again at approximately 11:12 and reset again at approximately 11:23. These events are indicated by numerals (3) and (4), respectively. Finally, the Alarm ID 45 is set once again at approximately 11:29 and reset once again at approximately 11:36. These events are indicated by numerals (5) and (6), respectively.

In a case where, for some reason, the settings of the Alarm ID 45 (i.e. event (1), (3) and (5) in Fig. 3a) were not received by the monitoring system from the control system we would not know for which period of times the Alarm ID 45 was really causing a shut down of the wind turbine.

However, employing another aspect of the method of the present invention solves this problem.

This is illustrated in Fig. 3b.

In case only the reset events (2), (4) and (6) (and not the set events (1), (3) and (5)) in respect of Alarm ID 45 are received and no other set event of other alarm IDs are received we know that Alarm ID 45 must have been set at some point in time and hence that the wind turbine would have been shut down, as we register that the average power production reduces to zero between approximately 10:20 and 10:40 and then again between 11:20 and 11:40.

Accordingly, it can be concluded that the alarm value in respect of Alarm ID 45 (assuming that the time stamps of setting of alarm ID 45 at (1), (3) and (5) were not received) is unreliable in the time span ranging from approximately 10:00 to 12:10.

By using the method of the present invention, the missing or unreliable time stamps relating to the setting of Alarm ID 45 can be corrected.

This is done by utilizing information representing a power production value as a function in time, again represented by an average power production within time segments of 10 min.

Looking at the average power production as a function of time in Fig. 3b it is seen that at 10:20 the power production reduces to zero, meaning that no power is being produced from this point in time.

As a corrected time stamp in respect of the setting (1) is defined the first point in time preceding the time stamp representing the resetting (at 10:40) of the alarm at which the power production value shifts from indicating that power is being produced to indicating that no power is being produced (at 10:20).

Again, in this example the power production value is power production averaged over time segments of a duration of 10 min. Therefore, in the present example, the corrected time stamp relating to the setting (1) of the Alarm ID 45 is selected as 10:20 minus haft the time segment over which the power produced is being averaged (10 min/2). Thereby we arrive at a corrected time stamp relating to the setting (1) of the Alarm ID 45 of 10:15.

This is entered in the data log in the monitoring system as being a corrected time stamp of the setting (1) of the Alarm ID 45.

Thereby the corrected time stamps associated with the setting (1) and the resetting (2) of the Alarm ID 45 will be 10:15 and approximately 10:42, respectively.

Moving on the missing setting (3) of the Alarm ID 45 in Fig, 3b we employ the same method.

As a corrected time stamp of the missing set time (3) of the Alarm ID 45 we define a point in time following the first point in time preceding the time stamp representing the resetting (at event (4) at 11:23) of the alarm at which the power production value shifts from indicating that power is being produced to indicating that no power is being produced (at 11:20).

As the power production value in this example is power production averaged over time segments of a duration of 10 min., the corrected time stamp relating to the setting (3) of the Alarm ID 45 is selected as 11:20 minus haft the time segment over which the power produced is being averaged (10 min/2). Thereby we arrive at a corrected time stamp relating to the setting of the Alarm ID 45 of 11:15.

This is entered in the data log in the monitoring system as being a corrected time stamp of the setting (3) of the Alarm ID 45.

In respect of the missing setting (5) of the Alarm ID 45 in Fig, 3b, we see that the first point in time preceding the time stamp representing the resetting (6) (at approximately 11:36) of the alarm at which the power production value shifts from indicating that power is being produced to indicating that no power is being produced (at 11:10), which corresponds to the setting (3) of the alarm ID 45.

For this reason the set value of the Alarm ID 45 continues from the time stamp associated with the setting (3) at 11:12 to the time stamp associated with the resetting (6) at 11:36. Thereby the time stamp (4) and (5) relating to resetting (4) and setting (5) of the Alarm ID 45 at times 11:30 and 11:23, respectively, will be very close or even coincide.

The scope of the invention is defined by the appended claims.

### List of reference numerals

- WT: Wind turbine
- CS: Control system
- MS: Monitoring system
- DL: Data log
- CDL: Corrected data log
- OR: Operational report originating from Data log
- COR: Corrected operational report originating from corrected data log
- AI: Alarm information
- OI: Operational information
- S₁: Sensor No. 1 monitoring the operation of the wind turbine
- S₂: Sensor No. 2 monitoring the operation of the wind turbine
- S3: Sensor No.3 monitoring the operation of the wind turbine
- S_{N}: Sensor No. N monitoring the operation of the wind turbine
- A_{ID 1}: Information relating to alarms from Alarm ID 1
- A_{ID 2}: Information relating to alarms from Alarm ID 2
- A_{ID 3}: Information relating to alarms from Alarm ID 3
- A_{ID M}: Information relating to alarms from Alarm ID M
- ST(1): Time stamp in respect of setting of alarm ID 1
- ST(2): Time stamp in respect of setting of alarm ID 2
- ST(3): Time stamp in respect of setting of alarm ID 3
- ST(M): Time stamp in respect of setting of alarm ID M
- RST(1): Time stamp in respect of resetting of alarm ID 1
- RST(2): Time stamp in respect of resetting of alarm ID 2
- RST(3): Time stamp in respect of resetting of alarm ID 3
- RST(M): Time stamp in respect of resetting of alarm ID M

## Claims

1. A method for assessing the reliability of data originating from monitoring a wind turbine (WT) during operation thereof; said method comprising the steps of:
allowing an array of sensors (S₁, S₁, S₃,... S_{N}) to sense one or more specific parameter values of said wind turbine;
in respect of one or more sensors (S₁, S₁, S₃,... S_{N}), transmitting said parameter value being sensed to a control system (CS);
allowing said control system (CS) to register an alarm condition in case a sensed parameter value, or a combination of two or more sensed parameter values, represents a situation in which it is desired to shut down the wind turbine according to one or more predetermined criteria;
allowing said control system to provide an alarm value associated with said alarm condition; wherein said alarm value being selected from the group comprising: setting of said alarm and resetting of said alarm; wherein such alarm condition is associated with a specific alarm ID;
wherein said method in respect of one or more alarm IDs furthermore comprising the steps of:
i) in respect of a specific time span, detecting one or more alarm values representing one or more settings and/or one or more resettings of said alarm having said alarm ID; and at the same time registering an associated time stamp relating to the point in time corresponding to the appearance of said one or more settings and/or one or more resettings of said alarm IDs;
ii) in respect of said time span, detecting information representing a power production value of said wind turbine as a function of time, said power production value being selected from the group comprising; information indicating that power is being produced by said wind turbine, and information indicating that no power is being produced by said wind turbine;
iii) in respect of said time span, or a portion thereof, correlating the information representing said power production value as a function of time on the one hand; with the time stamps of the one or more settings and/or resettings in respect of said alarm ID, on the other hand;
iv) determining whether or not a discrepancy exists between said information representing a power production value as a function of time on the one hand; and said time stamps detected in respect of said one or more settings and/or resettings in respect of said alarm ID, on the other hand;
v) in case a discrepancy is determined in step iv); annotating said specific alarm value in respect of said alarm ID as being unreliable in said time span or in said portion thereof.

2. A method according to claim 1, wherein said control system (CS) is connected to a monitoring system (MS), wherein said monitoring system is configured, in respect of one or more alarm IDs, for receiving and storing data relating to said alarm values and associated time stamps, as detected in step i) and data relating to said information representing a power production value as a function of time, as detected in step ii);
optionally wherein step iii), iv) and v), and optionally also step i) and ii) are being performed by said monitoring system (MS).

3. A method according to any of the preceding claims, wherein one or more of said one or more sensors relate to sensors for sensing:
problems with the mechanics; such as undesirably low level of gear oil, undesirably high bearing temperature, stuck pitch actuator, undesirably high yaw misalignment; and/or
problems with the grid, such as undesirably low grid frequency, undesirably high grid voltage, phase asymmetry; and/or
problems with the environment, such as undesirably high wind speed, undesirably low ambient temperature, undesirably low wind speed; and/or
external commands, such as remote stop instructions; and/or
normal operation, such as untwisting cables, performance of self-test, state of heating component;
presence of condensate in the electrical system, such as in the converter.

4. A method according to any of the preceding claims, wherein said representation of power production as a function of time, which is being detected in step ii), relates to one of the following: power produced, such as average power produced in a time segment of a predetermined duration; torque exhibited by the rotor axle of the wind turbine (WT), such as average torque exhibited by the rotor axle of the wind turbine (WT) in a time segment of a predetermined duration; angular velocity measured in respect of the rotor axle of the wind turbine (WT), such as average angular velocity measured in respect of rotor axle of the wind turbine (WT) in a time segment of a predetermined duration; current induced in the generator of the wind turbine (WT), such as average current induced in the generator of the wind turbine (WT) in a time segment of a predetermined duration; voltage induced in the generator of the wind turbine (WT), such as average voltage induced in the generator of the wind turbine (WT) in a time segment of a predetermined duration; general information that the operational state of the wind turbine is being OK or not OK;
and/or
wherein said discrepancy as determined in step iv) is caused by lack of detection of a resetting of said alarm ID, or is caused by lack of detection of a setting of said alarm ID;
and/or
wherein said method further comprising the following step:
vi) in case no discrepancy is determined in step iv); annotating said specific alarm value of said alarm ID as being reliable in said time span or in said portion thereof.

5. A method according to any of the preceding claims, wherein said method is being performed automatically;
and/or
wherein said method is being performed continuously or regularly in respect of successive time spans.

6. A method according to any of the preceding claims, wherein said method furthermore comprising correcting an alarm value, which in step v) has been annotated as being unreliable;
wherein optionally said discrepancy as determined in step iv) is caused by lack of detection of a resetting of said alarm ID; wherein said correction of said alarm value comprises the following steps:
a) from the detection of the information representing a power production value as detected in step ii), determine a first point in time, subsequent to the time stamp representing the setting of the alarm ID, at which the power production value shifts from indicating that no power is being produced to indicating that power is being produced;
b) define as the corrected reset time of the alarm ID, a moment in time following said first point in time, as determined in step a).

7. A method according to claim 4 and 6, wherein the information representing a power production value is being provided as averaged values being averaged over a segment of time; and wherein step b) comprises:
define as the corrected reset time of the alarm ID, a moment in time falling in a time range having a starting point and an end point;
wherein said starting point of said time range being the first point in time, at which the power production value shifts from indicating that no power is being produced to indicating that power is being produced, as determined in step a); and
wherein said end point of said time range being a point in time falling subsequent to said starting point by a duration corresponding to duration of said time segment.

8. A method according to claim 6, wherein said discrepancy as determined in step iv) is caused by lack of detection of a setting of said alarm ID; wherein said correction of said alarm value comprises the following steps:
a) from the detection of the information representing a power production value as detected in step ii), determine the first point in time, preceding the time stamp representing the resetting of the alarm ID, at which the power production value shifts from indicating that power is being produced to indicating that no power is being produced;
b) define as a corrected set time of the alarm ID, a moment in time preceding said first point in time, as determined in step a).

9. A method according to claim 4 and 8, wherein the information representing a power production value is being provided as averaged values being averaged over a segment of time; wherein step b) comprises:
define as a corrected set time of the alarm ID, a moment in time falling in a time range having a starting point and an end point;
wherein said end point of said time range being the first point in time, at which the power production value shifts from indicating that power is being produced to indicating that no power is being produced, as determined in step a);
wherein said starting point of said time range being a point in time falling prior to said end point by a duration corresponding to the duration of said time segment.

10. A method according to any of the preceding claims, wherein said method involves keeping a data log (DL), logging a data set relating to one or more of the following entries:
alarm values being detected, including the corresponding time stamp; information identifying the alarm ID in respect of which alarm values are being detected; the time span in respect of which a specific alarm value is being annotated as being unreliable, any corrected alarm values as determined by said method, and optionally also the corresponding corrected time stamps relating to settings and/or resettings of an alarm ID;
wherein optionally, in respect of one or more of said alarm IDs, a first original data log (DL) is being kept which logs and stores original data being supplied from the control system; and wherein a second data log (CDL) is being kept, which logs and stores corrected data which represents original data which has been corrected by the method according to any of the preceding claims;
wherein optionally said original data and said corrected data independently is selected from the group comprising: alarm ID, original time stamps relating to setting times and/or resetting times of a specific alarm ID, corrected time stamps relating to setting times and/or resetting times of a specific alarm ID; information relating to the power production value as a function of time.

11. A method according to any of the preceding claims, wherein said power production value of said wind turbine as a function of time, as determined in step ii) further and/or alternatively comprises: information indicating that power potentially could be produced by said wind turbine in its current state, and information indicating that no power potentially could be produced by said wind turbine in its current state.

12. A computer program product comprising instructions which, when the program is executed by a computer, cause the computer to carry out the steps of a method according to any of the preceding claims.

13. A SCADA system (Supervisory Control And Data Acquisition System) comprising a computer program product as defined in claim 12.

14. Use of a correlation between information representing a power production value as a function of time of a wind turbine on the one hand; and the time stamps of one or more settings and/or one or more resettings in respect of an alarm ID being detected in the operation of said wind turbine, on the other hand, for, according to the method of claim 1, assessing the reliability of data originating from monitoring said wind turbine during operation thereof; or for correcting erroneous time stamps of alarm values.

15. Use of corrected data as obtained according to the method of any of the claims 1 - 11 for calculating the amount of time in respect of which said wind turbine, or parts thereof, has been operating properly and/or improperly, regarding a specific type of condition triggering an alarm having a specific alarm ID.

## Patentansprüche

1. Verfahren zum Bewerten der Zuverlässigkeit von Daten, die einer Überwachung einer Windkraftanlage (WT) während ihres Betriebs entspringen; wobei das Verfahren die folgenden Schritte umfasst:
Zulassen, dass eine Gruppe von Sensoren (S₁, S₁, S₃, ... S_{N}) einen oder mehrere spezifische Parameterwerte der Windkraftanlage erfasst;
in Bezug auf einen oder mehrere Sensoren (S₁, S₁, S₃, ... S_{N}), Übertragen des erfassten Parameterwerts an ein Steuersystem (CS);
Zulassen, dass das Steuersystem (CS) eine Alarmbedingung registriert, falls ein erfasster Parameterwert oder eine Kombination von zwei oder mehr erfassten Parameterwerten, eine Situation darstellt, in der es wünschenswert ist, die Windkraftanlage gemäß einem vorbestimmten Kriterium oder mehreren vorbestimmten Kriterien abzuschalten;
Zulassen, dass das Steuersystem einen Alarmwert in Verknüpfung mit der Alarmbedingung bereitstellt;
wobei der Alarmwert ausgewählt ist aus der Gruppe umfassend: Einstellen des Alarms und Neueinstellen des Alarms; wobei eine solche Alarmbedingung mit einer spezifischen Alarm-ID verknüpft ist;
wobei das Verfahren in Bezug auf eine oder mehrere Alarm-IDs weiter die folgenden Schritte umfasst:
i) in Bezug auf eine spezifische Zeitspanne, Erfassen eines oder mehrerer Alarmwerte, die eine oder mehrere Einstellungen und/oder eine oder mehrere Neueinstellungen des Alarms mit der Alarm-ID darstellen; und gleichzeitig Registrieren eines verknüpften Zeitstempels, der sich auf den Zeitpunkt entsprechend dem Auftreten der einen oder mehreren Einstellungen und/oder einen oder mehreren Neueinstellungen der Alarm-IDs bezieht;
ii) in Bezug auf die Zeitspanne, Detektieren von Informationen, die einen Leistungserzeugungswert der Windkraftanlage als eine Funktion von Zeit darstellen, wobei der Leistungserzeugungswert aus der Gruppe ausgewählt ist, umfassend; Informationen, die angeben, dass Leistung durch die Windkraftanlage erzeugt wird, und Informationen, die angeben, dass keine Leistung durch die Windkraftanlage erzeugt wird;
iii) in Bezug auf die Zeitspanne, oder einen Abschnitt davon, Korrelieren der Informationen, die den Leistungserzeugungswert als eine Funktion von Zeit darstellen, einerseits; mit den Zeitstempeln der einen oder mehreren Einstellungen und/oder Neueinstellungen in Bezug auf die Alarm-ID andererseits;
iv) Ermitteln, ob eine Diskrepanz zwischen den Informationen, die einen Leistungserzeugungswert als eine Funktion von Zeit darstellen, einerseits; und den Zeitstempeln, die in Bezug auf die eine oder mehreren Einstellungen und/oder Neueinstellungen in Bezug auf die Alarm-ID detektiert werden, andererseits besteht;
v) falls in Schritt iv) eine Diskrepanz ermittelt wird; Verzeichnen des spezifischen Alarmwerts in Bezug auf die Alarm-ID als unzuverlässig in der Zeitspanne oder in dem Abschnitt davon.

2. Verfahren nach Anspruch 1, wobei das Steuersystem (CS) mit einem Überwachungssystem (MS) verbunden ist, wobei das Überwachungssystem in Bezug auf eine oder mehrere Alarm-IDs konfiguriert ist, Daten, die sich auf die Alarmwerte und verknüpfte Zeitstempel beziehen, wie in Schritt i) detektiert, und Daten, die sich auf die Informationen beziehen, die einen Leistungserzeugungswert als eine Funktion von Zeit darstellen, wie in Schritt ii) detektiert, zu empfangen und zu speichern;
wobei optional Schritt iii), iv) und v) und optional auch Schritt i) und ii) von dem Überwachungssystem (MS) durchgeführt werden.

3. Verfahren nach einem der vorstehenden Ansprüche, wobei einer oder mehrere des einen oder der mehreren Sensoren sich auf Sensoren beziehen zum Erfassen von:
Problemen mit der Mechanik; wie einen unerwünscht niedrigen Pegel von Getriebeöl, unerwünscht hohe Lagertemperatur, klemmendes Blattwinkelstellglied, unerwünscht hohe Gierfehlausrichtung; und/oder
Problemen mit dem Netz, wie unerwünscht niedrige Netzfrequenz, unerwünscht hohe Netzspannung, Phasenasymmetrie; und/oder
Problemen mit der Umwelt, wie unerwünscht hohe Windgeschwindigkeit, unerwünscht niedrige Umgebungstemperatur, unerwünscht niedrige Windgeschwindigkeit; und/oder
externen Befehlen, wie Fernstoppanweisungen; und/oder normalem Betrieb, wie Aufdrehen von Kabeln, Durchführen eines Selbsttests, Zustand von Heizkomponente;
Vorhandensein von Kondensat in dem elektrischen System, wie im Wandler.

4. Verfahren nach einem der vorstehenden Ansprüche, wobei die Darstellung von Leistungserzeugung als eine Funktion von Zeit, die in Schritt ii) detektiert wird, sich auf eines der Folgenden bezieht: erzeugte Leistung, wie durchschnittliche erzeugte Leistung in einem Zeitsegment einer vorbestimmten Dauer; Drehmoment, das die Drehachse der Windkraftanlage (WT) aufweist, wie durchschnittliches Drehmoment, das die Drehachse der Windkraftanlage (WT) in einem Zeitsegment einer vorbestimmten Dauer aufweist; Winkelgeschwindigkeit, gemessen in Bezug auf die Drehachse der Windkraftanlage (WT), wie durchschnittliche Winkelgeschwindigkeit, gemessen in Bezug auf die Drehachse der Windkraftanlage (WT) in einem Zeitsegment einer vorbestimmten Dauer; Strom, der in dem Generator der Windkraftanlage (WT) induziert wird, wie durchschnittlicher Strom, der in dem Generator der Windkraftanlage (WT) in einem Zeitsegment einer vorbestimmten Dauer induziert wird; Spannung, die in dem Generator der Windkraftanlage (WT) induziert wird, wie durchschnittliche Spannung, die in dem Generator der Windkraftanlage (WT) in einem Zeitsegment einer vorbestimmten Dauer induziert wird; allgemeine Informationen, dass der Betriebszustand der Windkraftanlage OK oder nicht OK ist;
und/oder
wobei die Diskrepanz, wie in Schritt iv) ermittelt, durch Mangel an Detektion einer Neueinstellung der Alarm-ID verursacht wird oder durch Mangel an Detektion einer Einstellung der Alarm-ID verursacht wird;
und/oder
wobei das Verfahren weiter den folgenden Schritt umfasst:
vi) falls keine Diskrepanz in Schritt iv) ermittelt wird; Verzeichnen des spezifischen Alarmwerts der Alarm-ID als zuverlässig in der Zeitspanne oder in dem Abschnitt davon.

5. Verfahren nach einem der vorstehenden Ansprüche, wobei das Verfahren automatisch durchgeführt wird;
und/oder
wobei das Verfahren kontinuierlich oder regelmäßig in Bezug auf aufeinanderfolgende Zeitspannen durchgeführt wird.

6. Verfahren nach einem der vorstehenden Ansprüche, wobei das Verfahren weiter Korrigieren eines Alarmwerts umfasst, der in Schritt v) als unzuverlässig verzeichnet wurde;
wobei optional die Diskrepanz, wie in Schritt iv) ermittelt, durch Mangel an Detektion einer Neueinstellung der Alarm-ID verursacht wird; wobei die Korrektur des Alarmwerts die folgenden Schritte umfasst:
a) aus der Detektion der Informationen, die einen Leistungserzeugungswert darstellen, wie in Schritt ii) detektiert, Ermitteln eines ersten Zeitpunkts, anschließend an den Zeitstempel, der die Einstellung der Alarm-ID darstellt, zu dem sich der Leistungserzeugungswert von einer Angabe, dass keine Leistung erzeugt wird, zu einer Angabe, dass Leistung erzeugt wird, verschiebt;
b) Definieren eines Moments, der dem ersten Zeitpunkt, wie in Schritt a) ermittelt, folgt, als die korrigierte Neueinstellungszeit der Alarm-ID.

7. Verfahren nach Anspruch 4 und 6, wobei die Informationen, die einen Leistungserzeugungswert darstellen, als Durchschnittswerte bereitgestellt sind, deren Durchschnitt über ein Zeitsegment gebildet wird; und wobei Schritt b) umfasst:
Definieren eines Moments, der in einen Zeitbereich mit einem Anfangspunkt und einem Endpunkt fällt, als die korrigierte Neueinstellungszeit der Alarm-ID;
wobei der Anfangspunkt des Zeitbereichs der erste Zeitpunkt ist, zu dem sich der Leistungserzeugungswert von einer Angabe, dass keine Leistung erzeugt wird, zu einer Angabe, dass Leistung erzeugt wird, wie in Schritt a) ermittelt, verschiebt; und
wobei der Endpunkt des Zeitbereichs ein Zeitpunkt ist, der um eine Dauer, die der Dauer des Zeitsegments entspricht, nach dem Anfangspunkt eintritt.

8. Verfahren nach Anspruch 6, wobei die Diskrepanz, wie in Schritt iv) ermittelt, durch Mangel an Detektion einer Einstellung der Alarm-ID verursacht wird; wobei die Korrektur des Alarmwerts die folgenden Schritte umfasst:
a) aus der Detektion der Informationen, die einen Leistungserzeugungswert wie in Schritt ii) detektiert darstellen, Ermitteln des ersten Zeitpunkts, der dem Zeitstempel vorangeht, der die Neueinstellung der Alarm-ID darstellt, zu dem sich der Leistungserzeugungswert von einer Angabe, dass Leistung erzeugt wird, zu einer Angabe, dass keine Leistung erzeugt wird, verschiebt;
b) Definieren eines Moments, der dem ersten Zeitpunkt vorangeht, wie in Schritt a) ermittelt, als eine korrigierte eingestellte Zeit der Alarm-ID.

9. Verfahren nach Anspruch 4 und 8, wobei die Informationen, die einen Leistungserzeugungswert darstellen, als Durchschnittswerte bereitgestellt sind, deren Durchschnitt über ein Zeitsegment gebildet wird; wobei Schritt b) umfasst:
Definieren eines Moments, der in einen Zeitbereich mit einem Anfangspunkt und einem Endpunkt fällt, als korrigierte eingestellte Zeit der Alarm-ID;
wobei der Endpunkt des Zeitbereichs der erste Zeitpunkt ist, zu dem sich der Leistungserzeugungswert von einer Angabe, dass Leistung erzeugt wird, zu einer Angabe, dass keine Leistung erzeugt wird, wie in Schritt a) ermittelt, verschiebt;
wobei der Anfangspunkt des Zeitbereichs ein Zeitpunkt ist, der um eine Dauer, die der Dauer des Zeitsegments entspricht, vor dem Endpunkt eintritt.

10. Verfahren nach einem der vorstehenden Ansprüche, wobei das Verfahren Führen eines Datenprotokolls (DL) beinhaltet, das einen Datensatz protokolliert, der sich auf einen oder mehrere der folgenden Einträge bezieht: detektierte Alarmwerte, beinhaltend den entsprechenden Zeitstempel; Informationen, die die Alarm-ID in Bezug darauf identifizieren, welche Alarmwerte detektiert werden; die Zeitspanne in Bezug darauf, welcher spezifische Alarmwert als unzuverlässig verzeichnet wird, sämtliche korrigierte Alarmwerte, die durch das Verfahren ermittelt werden, und optional auch die entsprechenden korrigierten Zeitstempel, die sich auf Einstellungen und/oder Neueinstellungen einer Alarm-ID beziehen,;
wobei optional in Bezug auf eine oder mehrere der Alarm-IDs ein erstes ursprüngliches Datenprotokoll (DL) geführt wird, das ursprüngliche Daten protokolliert und speichert, die von dem Steuersystem zugeleitet werden; und wobei ein zweites Datenprotokoll (CDL) geführt wird, das korrigierte Daten protokolliert und speichert, die ursprüngliche Daten darstellen, die durch das Verfahren nach einem der vorstehenden Ansprüche korrigiert wurden;
wobei optional die ursprünglichen Daten und die korrigierten Daten unabhängig ausgewählt sind aus der Gruppe umfassend: Alarm-ID, ursprüngliche Zeitstempel, die sich auf Einstellungszeiten und/oder Neueinstellungszeiten einer spezifischen Alarm-ID beziehen, korrigierte Zeitstempel, die sich auf Einstellungszeiten und/oder Neueinstellungszeiten einer spezifischen Alarm-ID beziehen; Informationen, die sich auf den Leistungserzeugungswert als eine Funktion von Zeit beziehen.

11. Verfahren nach einem der vorstehenden Ansprüche, wobei der Leistungserzeugungswert der Windkraftanlage als eine Funktion von Zeit, wie in Schritt ii) ermittelt, weiter und/oder alternativ umfasst: Informationen, die angeben, dass Leistung möglicherweise von der Windkraftanlage in ihrem aktuellen Zustand erzeugt werden könnte, und Informationen, die angeben, dass möglicherweise von der Windkraftanlage in ihrem aktuellen Zustand keine Leistung erzeugt werden könnte.

12. Computerprogrammprodukt, umfassend Anweisungen, die, wenn das Programm von einem Computerausgeführt wird, den Computer veranlassen, die Schritte eines Verfahrens nach einem der vorstehenden Ansprüche durchzuführen.

13. SCADA-System (Supervisory Control And Data Acquisition System), umfassend ein Computerprogrammprodukt nach Anspruch 12.

14. Verwenden einer Korrelation zwischen Informationen, die einen Leistungserzeugungswert als eine Funktion von Zeit einer Windkraftanlage darstellen, einerseits; und der Zeitstempel einer oder mehrere Einstellungen und/oder Neueinstellungen in Bezug auf eine Alarm-ID, die im Betrieb der Windkraftanlage detektiert werden, andererseits, zum Bewerten, gemäß dem Verfahren nach Anspruch 1, der Zuverlässigkeit von Daten, die einer Überwachung einer Windkraftanlage (WT) während ihres Betriebs entspringen; oder zum Korrigieren fehlerhafter Zeitstempel von Alarmwerten.

15. Verwenden korrigierter Daten, wie gemäß dem Verfahren nach einem der Ansprüche 1 - 11 erhalten, zum Berechnen des Zeitausmaßes in Bezug auf das die Windkraftanlage oder Teile davon korrekt und/oder nicht korrekt betrieben wurden, bezüglich einer spezifischen Art von Bedingung, die einen Alarm mit einer spezifischen Alarm-ID auslöst.

## Revendications

1. Procédé d'évaluation de la fiabilité de données provenant de la surveillance d'une éolienne (WT) pendant son fonctionnement ; ledit procédé comprenant les étapes consistant à :
permettre à un réseau de capteurs (S₁, S₁, S₃, ..., S_{N}) de détecter une ou plusieurs valeurs de paramètre spécifiques de ladite éolienne ;
par rapport à un ou plusieurs capteurs (S₁, S₁, S₃, ..., S_{N}), transmettre ladite valeur de paramètre étant détectée à un système de commande (CS) ;
permettre audit système de commande (CS) d'enregistrer une condition d'alarme dans le cas d'une valeur de paramètre détectée, ou une combinaison de deux ou plus valeurs de paramètre détectées, représentant une situation dans laquelle il est souhaité d'arrêter l'éolienne selon un ou plusieurs critères prédéterminés ;
permettre audit système de commande de fournir une valeur d'alarme associée à ladite condition d'alarme ; dans lequel ladite valeur d'alarme étant sélectionnée à partir du groupe comprenant : le réglage de ladite alarme et la réinitialisation de ladite alarme; dans lequel une telle condition d'alarme est associée à un ID d'alarme spécifique ;
dans lequel ledit procédé par rapport à un ou plusieurs ID d'alarme comprenant de plus les étapes consistant à :
i) par rapport à un intervalle de temps spécifique, détecter une ou plusieurs valeurs d'alarme représentant un ou plusieurs réglages et/ou une ou plusieurs réinitialisations de ladite alarme présentant ledit ID d'alarme; et en même temps enregistrer un intervalle de temps associé relatif au point dans le temps correspondant à l'apparition desdits un ou plusieurs réglages et/ou une ou plusieurs réinitialisations desdits ID d'alarme ;
ii) par rapport audit intervalle de temps, détecter des informations représentant une valeur de production d'énergie de ladite éolienne en fonction du temps, ladite valeur de production d'énergie étant sélectionnée à partir du groupe comprenant; des informations indiquant que l'énergie est produite par ladite éolienne, et des informations indiquant qu'aucune énergie n'est produite par ladite éolienne ;
iii) par rapport audit intervalle de temps, ou une portion de celui-ci, corréler les informations représentant ladite valeur de production d'énergie en fonction du temps d'une part ; avec les intervalles de temps des un ou plusieurs réglages et/ou réinitialisations par rapport audit ID d'alarme, d'autre part ;
iv) déterminer si une divergence existe entre lesdites informations représentant une valeur de production d'énergie en fonction du temps d'une part ; et lesdits intervalles de temps détectés par rapport auxdits un ou plusieurs réglages et/ou réinitialisations par rapport audit ID d'alarme, d'autre part ;
v) dans le cas où une divergence est déterminée à l'étape iv) ; annoter ladite valeur d'alarme spécifique par rapport audit ID d'alarme comme étant non fiable dans ledit intervalle de temps ou dans ladite portion de celui-ci.

2. Procédé selon la revendication 1, dans lequel ledit système de commande (CS) est raccordé à un système de surveillance (MS), dans lequel ledit système de surveillance est configuré, par rapport à un ou plusieurs ID d'alarme, pour la réception et le stockage de données relatives auxdites valeurs d'alarme et horodateurs associés, comme détecté à l'étape i) et de données relatives auxdites informations représentant une valeur de production d'énergie en fonction du temps, comme détecté à l'étape ii) ;
facultativement, dans lequel l'étape iii), iv) et v), et facultativement aussi l'étape i) et ii) sont réalisées par ledit système de surveillance (MS).

3. Procédé selon l'une quelconque des revendications précédentes, dans lequel un ou plusieurs desdits un ou plusieurs capteurs concernent des capteurs pour la détection de :
problèmes avec les mécanismes; tels que niveau faible de manière indésirable d'huile d'engrenage, température de palier élevée de manière indésirable, actionneur de calage bloqué, mauvais alignement de lacet élevé de manière indésirable ; et/ou
problèmes avec le réseau, tels que fréquence de réseau faible de manière indésirable, tension de réseau élevée de manière indésirable, asymétrie de phase ; et/ou
problèmes avec l'environnement, tels que vitesse du vent élevée de manière indésirable, température ambiante faible de manière indésirable, vitesse du vent faible de manière indésirable ; et/ou
commandes externes, telles que instructions d'arrêt distantes ; et/ou
fonctionnement normal, tels que détorsion de câbles, performance d'autotest, état de composant de chauffage ;
présence de condensat dans le système électrique, tel que dans le convertisseur.

4. Procédé selon l'une quelconque des revendications précédentes, dans lequel ladite représentation de production d'énergie en fonction du temps, qui est détectée à l'étape ii), concerne un de ce qui suit : énergie produite, telle qu'énergie moyenne produite dans un segment de temps d'une durée prédéterminée ; couple présenté par l'essieu de rotor de l'éolienne (WT), tel que couple moyen présenté par l'essieu de rotor de l'éolienne (WT) dans un segment de temps d'une durée prédéterminée ; vitesse angulaire mesurée par rapport à l'essieu de rotor de l'éolienne (WT), telle que vitesse angulaire moyenne mesurée par rapport à l'essieu de rotor de l'éolienne (WT) dans un segment de temps d'une durée prédéterminée ; courant induit dans le générateur de l'éolienne (WT), tel que courant moyen induit dans le générateur de l'éolienne (WT) dans un segment de temps d'une durée prédéterminée; tension induite dans le générateur de l'éolienne (WT), telle que tension moyenne induite dans le générateur de l'éolienne (WT) dans un segment de temps d'une durée prédéterminée; informations générales que l'état opérationnel de l'éolienne est OK ou pas OK ;
et/ou
dans lequel ladite divergence comme déterminée à l'étape iv) est causée par manque de détection d'une réinitialisation dudit ID d'alarme, ou est causée par manque de détection d'un réglage dudit ID d'alarme ;
et/ou
dans lequel ledit procédé comprenant en outre l'étape suivante :
vi) dans le cas où aucune divergence n'est déterminée à l'étape iv) ; annoter ladite valeur d'alarme spécifique dudit ID d'alarme comme étant fiable dans ledit intervalle de temps ou dans ladite portion de celui-ci.

5. Procédé selon l'une quelconque des revendications précédentes, dans lequel ledit procédé est réalisé automatiquement ;
et/ou
dans lequel ledit procédé est réalisé en continu ou régulièrement par rapport aux intervalles de temps successifs.

6. Procédé selon l'une quelconque des revendications précédentes, dans lequel ledit procédé comprenant de plus la correction d'une valeur d'alarme, qui à l'étape v) a été annotée comme étant non fiable ;
dans lequel facultativement ladite divergence comme déterminée à l'étape iv) est causée par manque de détection d'une réinitialisation dudit ID d'alarme; dans lequel ladite correction de ladite valeur d'alarme comprend les étapes suivantes consistant à :
a) à partir de la détection des informations représentant une valeur de production d'énergie comme détectée à l'étape ii), déterminer un premier point dans le temps, ultérieur à l'horodateur représentant le réglage de l'ID d'alarme, auquel la valeur de production d'énergie passe d'indiquer qu'aucune énergie n'est produite à indiquer que l'énergie est produite ;
b) définir comme le temps réinitialisé corrigé de l'ID d'alarme, un moment dans le temps suivant ledit premier point dans le temps, comme déterminé à l'étape a).

7. Procédé selon les revendications 4 et 6, dans lequel les informations représentant une valeur de production d'énergie sont fournies comme valeurs moyennes étant moyennes sur un segment de temps ; et dans lequel l'étape b) comprend l'étape consistant à :
définir comme le temps réinitialisé corrigé de l'ID d'alarme, un moment dans le temps tombant dans une plage de temps présentant un point de départ et un point final ;
dans lequel ledit point de départ de ladite plage de temps étant le premier dans le temps, auquel la valeur de production d'énergie passe d'indiquer qu'aucune énergie n'est produite à indiquer que l'énergie est produite, comme déterminée à l'étape a) ; et
dans lequel ledit point final de ladite plage de temps étant un point dans le temps tombant ultérieurement audit point de départ par une durée correspondant à la durée dudit segment de temps.

8. Procédé selon la revendication 6, dans lequel ladite divergence comme déterminée à l'étape iv) est causée par manque de détection d'un réglage dudit ID d'alarme ; dans lequel ladite correction de ladite valeur d'alarme comprend les étapes suivantes consistant à :
a) à partir de la détection des informations représentant une valeur de production d'énergie comme détectée à l'étape ii), déterminer le premier point dans le temps, précédant l'horodateur représentant la réinitialisation de l'ID d'alarme, auquel la valeur de production d'énergie passe d'indiquer que l'énergie est produite à indiquer qu'aucune énergie n'est produite ;
b) définir comme un temps réglé corrigé de l'ID d'alarme, un moment dans le temps précédant ledit premier point dans le temps, comme déterminé à l'étape a).

9. Procédé selon les revendications 4 et 8, dans lequel les informations représentant une valeur de production d'énergie sont fournies comme valeurs moyennes étant moyennes sur un segment de temps ; dans lequel l'étape b) comprend les étapes consistant à :
définir comme un temps réglé corrigé de l'ID d'alarme, un moment dans le temps tombant dans une plage de temps présentant un point de départ et un point final ;
dans lequel ledit point final de ladite plage de temps étant le premier point dans le temps, auquel la valeur de production d'énergie passe d'indiquer que l'énergie est produite à indiquer qu'aucune énergie n'est produite, comme déterminé à l'étape a) ;
dans lequel ledit point de départ de ladite plage de temps étant un point dans le temps tombant avant ledit point final d'une durée correspondant à la durée dudit segment de temps.

10. Procédé selon l'une quelconque des revendications précédentes, dans lequel ledit procédé implique la conservation d'un journal de données (DL), l'enregistrement d'un ensemble de données relatif à une ou plusieurs des entrées suivantes : valeurs d'alarme étant détectées, incluant l'horodateur correspondant ; informations identifiant l'ID d'alarme par rapport auxquelles des valeurs d'alarme sont détectées ; l'intervalle de temps par rapport auquel une valeur d'alarme spécifique est annotée comme étant non fiable, toute valeur d'alarme corrigée comme déterminée par ledit procédé, et facultativement aussi les horodateurs corrigés correspondants relatifs aux réglages et/ou réinitialisations d'un ID d'alarme ;
dans lequel facultativement, par rapport aux un ou plusieurs desdits ID d'alarme, un premier journal de données originales (DL) est conservé, lequel enregistre et stocke des données originales étant fournies par le système de commande ; et dans lequel un second journal de données (CDL) est conservé, lequel enregistre et stocke des données corrigées qui représentent des données originales qui ont été corrigées par le procédé selon l'une quelconque des revendications précédentes ;
dans lequel facultativement lesdites données originales et lesdites données corrigées indépendamment sont sélectionnées à partir du groupe comprenant : ID d'alarme, horodateurs orignaux relatifs aux temps de réglage et/ou temps de réinitialisation d'un ID d'alarme spécifique, horodateurs corrigés relatifs aux temps de réglage et/ou temps de réinitialisation d'un ID d'alarme spécifique ; informations relatives à la valeur de production d'énergie en fonction du temps.

11. Procédé selon l'une quelconque des revendications précédentes, dans lequel ladite valeur de production d'énergie de ladite éolienne en fonction du temps, comme déterminé à l'étape ii) en outre et/ou en variante comprend : des informations indiquant que l'énergie pourrait être produite potentiellement par ladite éolienne dans son état actuel, et des informations indiquant qu'aucune énergie ne pourrait être produite potentiellement par ladite éolienne dans son état actuel.

12. Produit de programme informatique comprenant des instructions qui, lorsque le programme est exécuté par un ordinateur, amènent l'ordinateur à réaliser les étapes d'un procédé selon l'une quelconque des revendications précédentes.

13. Système SCADA (système de contrôle et d'acquisition de données) comprenant un produit de programme informatique selon la revendication 12.

14. Utilisation d'une corrélation entre des informations représentant une valeur de production d'énergie en fonction du temps d'une éolienne d'une part ; et les horodateurs des un ou plusieurs réglages et/ou des un ou plusieurs réinitialisations par rapport à un ID d'alarme étant détecté dans le fonctionnement de ladite éolienne, d'autre part, pour, selon le procédé selon la revendication 1, l'évaluation de la fiabilité de données provenant de la surveillance de ladite éolienne pendant son fonctionnement ; ou pour la correction d'horodateurs erronés de valeurs d'alarme.

15. Utilisation de données corrigées comme obtenues selon le procédé selon l'une quelconque des revendications 1-11 pour le calcul de la quantité de temps par rapport auquel ladite éolienne, ou des parties de celle-ci ont fonctionné correctement et/ou incorrectement, concernant un type spécifique de condition déclenchant une alarme présentant un ID d'alarme spécifique.
